# EUROPEAN PATENT SPECIFICATION

(11) **EP 0 859 441 B1**
(45) Date of publication and mention of the grant of the patent: **15.01.2003**
(21) Application number: 98300902.8
(22) Date of filing: 06.02.1998
(51) Int. Cl.: H02G 3/06

(54) **Improved trunking and the like**
Verbesserte Kabelrinne
Goulotte améliorée pour câbles

(30) Priority: 06.02.1997 GB 9702408
(43) Date of publication of application: 19.08.1998
(73) Proprietor: Electrix International Limited, Bishop Auckland, County Durham DL14 6XP (GB)
(72) Inventor: Thompson, Malcolm, Weardale, County Durham, DL13 3HE (GB)
(74) Representative: Vinsome, Rex Martin

(56) References cited:
- EP-A- 0 630 090
- GB-A- 1 222 336

## Description

The present invention is concerned with trunking and like generally elongate systems by means of which materials are enclosed or bulk materials are conveyed. It will be described and illustrated with reference to trunking systems but is equally applicable to such other similar systems.

Such trunking systems are assembled from a variety of components interconnected to provide support and/or protection for, among other materials, electric cabling. The components usually comprise linear straight sections, joined at their ends to other similar components by various types of interconnecting sections, including bends or corner sections. The components are usually open along one continuous surface, to assist the insertion of the cable or other material when the system is first installed and also to afford subsequent access to the interior of the trunking for maintenance purposes. These linear openings are usually closed by corresponding lids.

The joints between adjacent sections may be made in various ways but entail placing the opening at an end of one such section against the opening of the adjacent section and connecting the sections by means of projections, lugs or separate connectors and screws, bolts or clips. The resulting joints are adequate for many purposes but are less satisfactory for use in installations where a high standard of hygiene and cleanliness is demanded, for example in the food, pharmaceutical and beverage industries. The joints are potential collectors of dirt or infestation and are not easily cleaned.

In our prior application, GB2318917 published 06.05.1998, which does not constitute prior art, we have described a trunking or like system wherein the lid of a trunking component of the foregoing types is formed with an extension which overlies the joint at an end of the component and thereby reduces or eliminates the foregoing problem. However some existing trunking systems are designed to have the joints between the lids of such components protected by discrete cover plates. It may be difficult to secure such cover plates in position after the lids have been fitted, in particular in such systems where the lids themselves are retained in position by turnbuckles or similar devices. Another example of a device of this type is described in European Patent Publication 0630090. This document describes the use of a coverplate to cover the join between two lids used on lengths of trunking.

It is an object of the present invention to provide improved trunking by means of which the above-mentioned difficulty is overcome and the problems associated with such latter systems are reduced or eliminated.

According to the present invention there is provided a trunking component (10) comprising an open body having a flat base (11) and upright sides (12,13) extending between at least two generally rectangular openings defined on three sides thereof by said base (11) and upright sides (12,13), a lid (17) adapted to close an opening at the top of said body, a cover plate adapted to overlie the junction between one end of said lid (17) and the end of an aligned adjacent lid (18) of a further trunking component (16), characterised in that the component further comprises a rotary locking means (24 & 25) to both secure said cover plate (23) to said lid (17) and secure said lid (17) to said body, said rotary locking means (24 & 25) being adapted to rotate between a first position and a second position wherein in said second position said locking means (24 & 25) secures said cover plate and said lid to said body and engages a feature (14,15) of the body of the component (10) and in said first position said locking means (24 & 25) secures said cover plate to said lid and is not engaged with said feature (14,15).

By means of the rotary locking means, it is therefore possible to secure the lid and the cover plate in position simultaneously and thus to avoid the difficulty arising from carrying out those operations in independent sequence.

The rotary locking means preferably is designed to rotate between a first position in which the means, for example a cam or turnbuckle, is in general alignment with the opening at the top of the body and a second position in which it engages a feature of the body of the component. Most preferably the component has a pair of flanges, extending towards each other from the tops of the two upright sides of the body, preferably along the full length of the opening. The cover plate may then be secured to the lid by the rotary locking means acting essentially as a bolt or the like until the lid is installed and then rotation of the locking means may lock the lid and cover plate in position over the component and the joint.

An aperture is provided in the lid, adjacent to one end of the lid, to enable the cover plate to be secured in place. In general, it is preferred to provide such an aperture at each end of the lid, so that the cover plate may be fitted at either end. In one form of the invention, the or each said aperture is elongate in the direction of the length of the lid, so that the cover plate and rotary locking means may be retracted from the position in which they will subsequently be locked; in this way, any risk of the locking means impeding the assembly during its installation by extending beyond the end of the lid is avoided. The cover plate and locking means may then be slid forward into their intended position of use before they are locked in place.

The trunking component may be a simple straighc length of open trunking with generally parallel openings at its opposite ends, or it may be a corner section, by which the trunking may change direction within a generally horizontal plane, or an inside or outside bend section enabling the trunking to change direction from a horizontal direction to vertical or vice versa. In all of these forms, the two upright sides of the component lie in parallel planes. In the case of straight sections and corner sections the lid overall will be generally flat between the extensions but the lids for the inside or outside bend sections are angled in order to accommodate the change of direction of the trunking.

Each lid is preferably a close fit upon the body of the component and preferably has a pheripheral, downwardly-extending flange along those sides which overlie the upright sides of the body.

The lid, cover plate and base are preferably formed of metal, in particular of steel and most preferably of stainless steel.

Connection of the trunking component to the adjacent trunking components is best assisted by providing some form of coupling. Such a coupling, which may for example be of slightly smaller dimensions than the trunking and be therefore able to fit within the joints, may be welded or otherwise retained in place within the body of the trunking component of the present invention and attachable by bolts or similar means to the adjacent components.

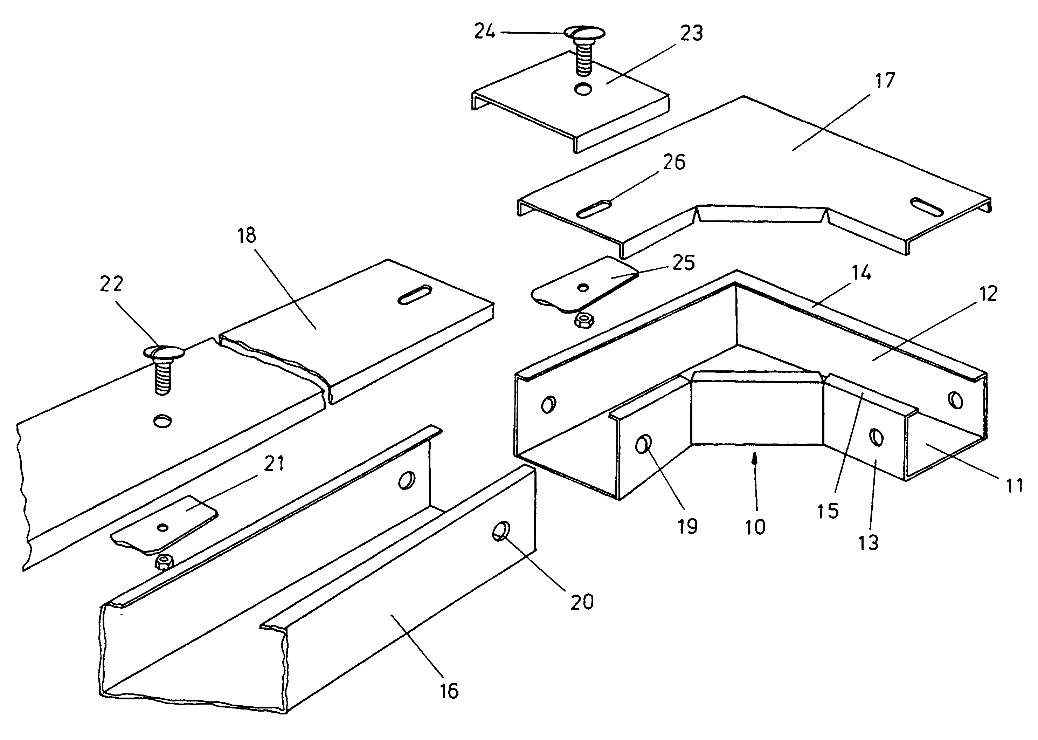

The invention will now be further described with reference to the accompanying drawing, which illustrates, by way of example only, one preferred embodiment of the trunking component according to the present invention, shown in exploded perspective view.

The illustrated component 10 is an open corner piece having a flat base 11 and upright sides 12, 13 etc. with inwardly-directed flanges 14, 15. The ends of the component are generally rectangular openings which can be abutted with the openings of aligned adjacent components such as the illustrated linear component 16 to form close joints. The components 10 and 16 are provided with close-fitting lids 17 and 18 respectively, each with downturned peripheral flanges.

When a joint between the illustrated components is to be made, the open ends of the components are brought together and secured by a coupling such as any conventional connector, using the holes 19, 20 for that purpose. The lid 18 may be secured in place, either before or after the components are secured together, by means of a turnbuckle 21 in the middle of the length of the lid, operated by turning a bolt 22.

A cover plate 23 is secured to the lid 17 by means of a bolt 24 of a turnbuckle 25, which bolt extends through an elongate aperture 26 in the lid, before the lid is fitted. The turnbuckle is at this stage turned into alignment with the trunking component 10 as illustrated and is retracted, with the cover plate 23, along the aperture 26 away from the end of the lid. The lid may now be fitted to the trunking component and the cover plate 23 slid forwardly along the aperture 26 into a position in which it overlies the joint between the components. In that position it may be secured in place by rotation of the turnbuckle 25 by means of the bolt 24.

## Claims

1. A trunking component (10) comprising an open body having a flat base (11) and upright sides (12,13) extending between at least two generally rectangular openings defined on three sides thereof by said base (11) and upright sides (12,13), a lid (17) adapted to close an opening at the top of said body, a cover plate adapted to overlie the junction between one end of said lid (17) and the end of an aligned adjacent lid (18) of a further trunking component (16), **characterised in that** the component further comprises a rotary locking means (24 & 25) to both secure said cover plate (23) to said lid (17) and secure said lid (17) to said body, said rotary locking means (24 & 25) being adapted to rotate between a first position and a second position wherein in said second position said locking means (24 & 25) secures said cover plate and said lid to said body and engages a feature (14,15) of the body of the component (10) and in said first position said locking means (24 & 25) secures said cover plate to said lid and is not engaged with said feature (14,15).

2. A component according to Claim 1, wherein the component has a pair of flanges (14,15) extending towards each other from the tops of the two upright sides (12,13) of the body, preferably along the full length of the opening.

3. A component according to either claim 1 or 2, further comprising an aperture (26) provided in the lid (17), adjacent to one end of the lid (17), to enable the cover plate to be secured in place.

4. A component according to Claim 3, comprising such an aperture (26) at each end of the lid (17), so that the cover plate (23) may be fitted at either end.

5. A component according to claim 3 or 4 , wherein the or each said aperture (26) is elongate in the direction of the length of the lid (17), so that the cover plate (23) and rotary locking means (24 & 25) may be retracted from the position in which they will subsequently be locked.

6. A component according to any one of the preceding claims, wherein the component (10) is a simple straight length of open trunking with generally parallel openings at its opposite ends, or is a corner section, by which the trunking may change direction within a generally horizontal plane, or an inside or outside bend section enabling the trunking to change direction from a horizontal direction to vertical or vice versa.

7. A component according to Claim 6 wherein the two upright sides (12,13) of the component lie in parallel planes.

8. A component according to any one of the preceding claims, wherein the lid (17)is a close fit upon the body of the component (10) and preferably has a peripheral, downwardly-extending flange along those sides which overlie the upright sides (12, 13) of the body.

9. A component according to any one of the preceding claims, wherein the lid (17), cover plate (23) and base are formed of metal, preferably of steel and most preferably of stainless steel.

10. A component according to any one of the preceding claims, further comprising coupling means for assisting connection of the component (10) to the adjacent trunking components (16).

## Patentansprüche

1. Schachtteil (10) mit einem offenen Körper, der eine flache Basis (11) und senkrechte Seiten (12,13) aufweist, die sich zwischen zumindest zwei im allgemeinen rechtwinkligen Öffnungen an drei Seiten des offenen Körpers aus Basis (11) und Seitenn (12,13) erstrecken, mit einem Deckel (7) zum Verschließen einer Öffnung an der Oberseite des Körpers, mit einer Abdeckplatte zum Überdecken der Verbindung zwischen einem Ende des Deckels (17) und dem Ende eines angrenzenden Deckels (18) eines weiteren Schachtteiles (16), **dadurch gekennzeichnet, daß** das Teil einen Drehverschlussmechanismus (24,25) aufweist zum Verbinden der Abdeckplatte (23) mit dem Deckel (17) und zum Verbinden des Deckels (17) mit dem Körper, wobei der Drehverschlussmechanismus (24,25) zur Ausführung einer Drehbewegung zwischen einer ersten Position und einer zweiten Position beschaffen ist und in der zweiten Position der Drehverschlussmechanismus (25) die Abdeckplatte (23) und den Deckel (17) mit dem Körper verbindet und einen Teil (14,15) des Körpers des Teiles (10) erfasst und in der ersten Position der Drehverschlussmechanismus (14,15) der Abdeckplatte (23) und den Deckel (17) verbindet und den Teil (14,15) nicht erfasst.

2. Schachtteil gemäß Anspruch 1, **dadurch gekennzeichnet, daß** das Teil ein Paar von Flanschen (14,15) umfasst, die sich an der Oberseite der Seiten (12,13) einander zuweisend erstrecken, bevorzugt über die Gesamtlänge der Öffnung.

3. Schachtteil gemäß Anspruch 1 oder 2, **dadurch gekennzeichnet, daß** der Deckel (17) eine Öffnung (26) umfasst, die neben einem Ende des Deckels (17) liegt zur Befestigung der Abdeckplatte (23) in Position.

4. Schachtteil gemäß Anspruch 3, **dadurch gekennzeichnet, daß** eine solche Öffnung (26) an jedem Ende des Deckels (17) vorgesehen ist, zur Aufnahme der Abdeckplatte (26) an dem einen oder dem anderen Ende.

5. Schachtteil gemäß der Ansprüche 3 oder 4, **dadurch gekennzeichnet, daß** die Öffnung (26) oder die Öffnungen (26) sich in Längsrichtung des Deckels (17) erstrecken, derart, daß die Abdeckplatte (23) und der Deckelverschlussmechanismus (24,25) aus der Position, in der sie nachfolgend befestigt werden, zurückziehbar sind.

6. Schachtteil gemäß einem der vorhergehenden Ansprüche, wobei das Teil (10) eine einfache, gerade Länge eines offenen Schachtes mit im allgemeinen parallelen Öffnungen an den gegenüberliegenden Enden ist, oder ein Eckabschnitt, in welchem der Schachtverlauf seine Richtung innerhalb einer horizontal verlaufenden Ebene ändert, oder ein nach innen oder nach außen gebogener Abschnitt zur Richtungsänderung des Schachtverlaufes von einer horizontalen Richtung in eine vertikale Richtung oder umgekehrt.

7. Schachtteil gemäß Anspruch 6, **dadurch gekennzeichnet, daß** die beiden Seiten (12,13) des Teiles in parallelen Ebenen liegen.

8. Schachtteil gemäß einem der vorhergehenden Ansprüche, **dadurch gekennzeichnet, daß** der Deckel (17) in einer schließenden Position auf dem Körper des Teiles (10) aufgenommen ist und bevorzugt einen äußeren, sich abwärts erstreckenden Flansch an den Seiten aufweist, die die senkrechten Seiten (12,13) des Körpers überdecken.

9. Schachtteil gemäß einem der vorhergehenden Ansprüche, **dadurch gekennzeichnet, daß** der Deckel (17), die Abdeckplatte (23) und eine Basis aus Metall gefertigt sind, bevorzugt aus Stahl und besonders bevorzugt aus rostfreiem Stahl.

10. Schachtteil gemäß einem der vorhergehenden Ansprüche, **dadurch gekennzeichnet, daß** Kupplungselemente zur Unterstützung der Verbindung eines Teiles (10) mit einem anstoßenden Schachtteil (16) vorgesehen sind.

## Revendications

1. Elément de conduit (10) comprenant un corps ouvert ayant une base plate (11) et des côtés verticaux (12, 13) s'étendant entre au moins deux ouvertures généralement rectangulaires définies sur trois côtés de celui-ci par ladite base (11) et les côtés verticaux (12, 13), un couvercle (17) étant adapté pour fermer une ouverture au niveau du dessus dudit corps, une plaque de recouvrement étant adaptée pour recouvrir la jonction entre une extrémité dudit couvercle (17) et l'extrémité d'un couvercle adjacent aligné (18) d'un élément de conduit supplémentaire (16), **caractérisé en ce que** l'élément comprend en outre des moyens de verrouillage rotatifs (24 et 25) pour fixer à la fois ladite plaque de couverture (23) audit couvercle (17) et fixer ledit couvercle (17) audit corps, lesdits moyens de verrouillage rotatifs (24 et 25) étant adaptés pour tourner entre une première position et une seconde position dans lesquelles dans ladite seconde position lesdits moyens de verrouillage (24 et 25) fixent ladite plaque de couverture et ledit couvercle audit corps et mettent en prise une partie (14, 15) du corps de l'élément (10) et dans ladite première position lesdits moyens de verrouillage (24 et 25) fixent ladite plaque de couverture audit couvercle et ne sont pas mis en prise avec ladite partie (14, 15).

2. Elément selon la revendication 1, dans lequel l'élément présente une paire de brides (14, 15) s'étendant en direction l'une de l'autre depuis les parties supérieures des deux côtés verticaux (12, 13) du corps, de préférence sur la longueur totale de l'ouverture.

3. Elément selon la revendication 1 ou la revendication 2, comprenant en outre une ouverture (26) prévue dans le couvercle (17), adjacente à une extrémité du couvercle (17), pour permettre à la plaque de recouvrement d'être fixée en place.

4. Elément selon la revendication 3, comprenant cette ouverture (26) au niveau de chaque extrémité du couvercle (17), de sorte que la plaque de recouvrement (23) puisse être ajustée au niveau de l'une ou l'autre des extrémités.

5. Elément selon la revendication 3 ou la revendication 4, dans lequel ladite ouverture ou chaque dite ouverture (26) est allongée dans la direction de la longueur du couvercle (17), de sorte que la plaque de recouvrement (23) et les moyens de verrouillage rotatifs (24 et 25) puissent être libérés de la position dans laquelle ils vont être par la suite verrouillés.

6. Elément selon l'une quelconque des revendications précédentes, dans lequel l'élément (10) est une simple longueur droite de conduit ouvert avec des ouverture généralement parallèles au niveau de ses extrémités opposées, ou présente une section en coin, au moyen de laquelle le conduit peut changer de direction à l'intérieur d'un plan généralement horizontal, ou bien une section courbée vers l'intérieur ou vers l'extérieur permettant au conduit de changer de direction depuis une direction horizontale vers la verticale ou vice versa.

7. Elément selon la revendication 6, dans lequel les deux côtés verticaux (12, 13) de l'élément reposent dans des plans parallèles.

8. Elément selon l'une quelconque des revendications précédentes, dans lequel ledit couvercle (17) est en ajustement serré sur le corps de l'élément (10) et possède de préférence une bride périphérique s'étendant vers le bas le long de ces côtés qui recouvrent les côtés verticaux (12, 13) du corps.

9. Elément selon l'une quelconque des revendications précédentes, dans lequel le couvercle (17), la plaque de recouvrement (23) et la base sont formés de métal, de préférence d'acier et de manière préférée entre toutes d'acier inoxydable.

10. Elément selon l'une quelconque des revendications précédentes, comprenant en outre des moyens de couplage pour aider la connexion de l'élément (10) aux éléments de conduit adjacents (16).
